# EUROPEAN PATENT APPLICATION

(11) **EP 3 690 473 A1**
(43) Date of publication of application: **05.08.2020**
(21) Application number: 19305124.0
(22) Date of filing: 01.02.2019
(51) Int. Cl.: G01S 7/02, G01S 17/93, G01S 7/00, G01S 15/93, H04W 84/18

(54) **A SPATIAL SENSOR SYNCHRONIZATION SYSTEM USING A TIME-DIVISION MULTIPLE ACCESS COMMUNICATION SYSTEM**

(71) Applicant: Terabee S.A.S., 01630 Saint-Genis Pouilly (FR)
(72) Inventor: KOVERMANN, Jan W., 74520 Vulbens (FR); RUFFO, Massimiliano, 1224 Chêne-Bougerie (CH)
(74) Representative: Weihs, Bruno Konrad

(57) **Abstract**

A spatial sensor synchronization system using a Time-Division Multiple Access (TDMA) communication system, intended for a plurality of entities evolving inside the TDMA communication system, whereby each one of the plurality of entities is intended to comprise a spatial sensor and a tag enabled to communicate in the TDMA communication system, further whereby each spatial sensor is enabled to make a spatial measurement during a determined active time period, further whereby the tags from the plurality of entities are addressed in sequence by the TDMA communication system with a determined sequence period separating two subsequent addresses in the TDMA communication system. Each of the tags comprises electrical trigger output means configured to output an electrical trigger to the sensor of the corresponding entity at the time of being addressed by the TDMA communication system. Each of the sensors comprises electrical trigger input means connected to the electrical trigger output means, and configured to initiate a spatial sensor measurement for each received electrical trigger. A duration of the determined sequence period is equal or greater than a duration of the determined active time period.

## Description

### Technical field

The invention relates to a novel method and system for spatial sensor synchronization for one or more spatial sensors that are used together with a Time-Division Multiple Access (TDMA) communication system. Such TDMA communication system may be an Ultra Wide Band (UWB) positioning system. Preferably the spatial sensor is a distance measurement or anti-collision sensor.

### Background

Autonomous robots need at least two inputs to navigate: position to static infrastructure and anti-collision sensing for avoiding dynamic obstacles. In a typical application in industry or logistics, the relative positioning system to static infrastructure can be a UWB indoor positioning system and the collision avoidance functionality can be provided through the use of Time of Flight (ToF) sensors - at least one per autonomous robot.

ToF sensors, especially when based on phase measurement principle, can suffer from false or corrupted measurements due to cross talk between at least two ToF sensors measuring at the same time, especially when the illumination of the two devices overlap. This is a likely scenario in the case at least two robots operate in the same static infrastructure.

Systems for crosstalk avoidance exist based on synchronization over cable, an example for an implementation of which can be found in PCT/EP2018/072978. For freely moving robots this method is not applicable, a wireless solution as described above is necessary.

Departing from the known systems as described above, one aim of the present invention is to find a method and a system that prevent false or corrupted measurements.

### Summary of the invention

The invention provides a spatial sensor synchronization system using a Time-Division Multiple Access (TDMA) communication system, intended for a plurality of entities evolving inside the TDMA communication system, whereby each one of the plurality of entities is intended to comprise a spatial sensor and a tag enabled to communicate in the TDMA communication system, further whereby each spatial sensor is enabled to make a spatial measurement during a determined active time period, further whereby the tags from the plurality of entities are addressed in sequence by the TDMA communication system with a determined sequence period separating two subsequent addresses in the TDMA communication system. Each of the tags comprises electrical trigger output means configured to output an electrical trigger to the sensor of the corresponding entity at the time of being addressed by the TDMA communication system. Each of the sensors comprises electrical trigger input means connected to the electrical trigger output means, and configured to initiate a spatial sensor measurement for each received electrical trigger. A duration of the determined sequence period is equal or greater than a duration of the determined active time period.

In a preferred embodiment of the invention, the spatial sensor is a distance measurement or anti-collision sensor.

In a further preferred embodiment, the TDMA communication system is an Ultra Wide Band (UWB) system.

In a further preferred embodiment, the spatial sensor is a Time of Flight (ToF) sensor, and the TDMA communication system is an Ultra Wide Band (UWB) system.

In a further preferred embodiment, at least one of the plurality of entities is intended to comprise at least an additional ToF sensor, and that the additional ToF sensor is also triggered by the received electrical trigger.

In a second aspect, the invention provides a method for spatial sensor synchronization for one or more spatial sensors that are used together with a Time-Division Multiple Access (TDMA) communication system. The method comprises steps of: the one or more spatial sensors connects to the TDMA system; the one or more spatial sensors extracts a timing signal from an output signal of a TDMA device after having addressed the TDMA device within the TDMA system; the one or more spatial sensors aligns to the timing signal; use the timing signal as a trigger signal to trigger one or a series of spatial sensors from the one or more spatial sensors for measuring; and repeating the method by starting again at the step of the one of more spatial sensors connecting to the TDMA system.

In a further preferred embodiment, at the step in which the one or more spatial sensors aligns to the timing signal, the one or more spatial sensors waits for the timing signal to arrive.

In a further preferred embodiment, at the step in which the one or more spatial sensors aligns to the timing signal, an internal clock respectively of the one or more spatial sensors synchronizes with the timing signal, and each one of the one or more spatial sensors waits a predefined time before measuring.

In a further preferred embodiment, prior to implementing the step of the one or more spatial sensors extracting a timing signal, the method further comprises a step of shaping and sending the timing signal by the TDMA device such that it provides right electrical characteristics for a trigger input of each respective one or more spatial sensors.

In a further preferred embodiment, the step of using the timing signal further comprises a step of providing the one or more spatial sensors in a daisy chain, whereby each spatial sensor receives, delays and re-emits the trigger signal, whereby each spatial sensor delays such that no crosstalk from measurements occurs.

In a further preferred embodiment, the step of using the timing signal further comprises a step of providing the one or more spatial sensors in a star topology of spatial sensors where each one of the spatial sensors receives the trigger signal at the same time and each one of the spatial sensors delays a start of the measuring by a different amount of time chosen such that no crosstalk from measurements occurs.

In a further preferred embodiment, the step of using the timing signal further comprises a step of providing the one or more spatial sensors in a sensor hub with the one or more spatial sensors connected to it, the sensor hub being configured to implement a step of determining a measurement sequence for the one or more spatial sensors in such a way that no crosstalk from measurements occurs.

In a further preferred embodiment, the sensor hub is further configured to implement a step of optimizing a measurement speed depending on a geometrical configuration of the one on more spatial sensors.

### Brief description of the figures

The invention will be explained through the description of preferred embodiments, and in reference to the drawings, wherein
Figure 1 illustrates an example system comprising a plurality of robots and a target intended to illustrate a problem addressed by the invention;
Figure 2 schematically illustrates an example embodiment of a system according to the invention;
Figure 3 schematically illustrates an internal configuration of an autonomous robot according to an example embodiment of the invention;
Figure 4 contains a timing diagram for an example system according to the invention; and
Figure 5 contains a flowchart illustrating an example implementation of the method according to the invention.

### Detailed description of preferred embodiments of the invention

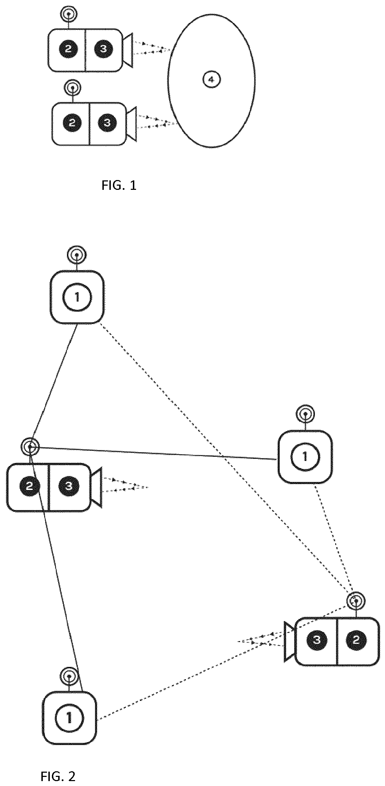

Figure 1 illustrates the problem that is overcome by the use of the present invention. Each of a plurality of autonomous robots (2, 3) uses an active sensing technology with an active sensor 3 that may interfere in case of simultaneous measurement. In the case in which at least two robots measure and point to a same target 4 at the same time, interference may appear and lead to erroneous measurements and in some cases accidents or lost navigation. In the case each of the robots is equipped with an UWB-based absolute positioning system 2, the invention provides a method of synchronizing the measurements of the active sensors 3 in such way that no interference occurs.

In one preferred embodiment the present invention departs from two prior art technologies, namely UWB positioning (see for example reference PMC4883398) and Time-of-Flight (ToF) sensors.

ToF sensors work in a pulsed manner according to the following 2 phases:
- an active phase where a signal is sent out and its reflection from a target is received at the same time; and
- a passive phase where the received signal is treated, calibrated and communicated.

The active phase is typically short compared to the passive phase, nevertheless it is in the active phase that crosstalk may occur as explained hereafter: if in a first ToF sensor that sent out a signal that is reflected from the target and received in the first ToF sensor, one of the signals from another ToF sensor is also received in the first ToF, in superposition.

UWB systems typically comprise a number of UWB transceivers fixed to the static infrastructure in known positions (called 'anchors') and portable UWB transceivers (called 'tags') that communicate with the anchors and calculate their relative position to the anchors and therefore to the static infrastructure using the Time Difference Of Arrival (TDOA) principle (See for example reference Multilateration). Since only one tag at a time can communicate with the anchors, the system is timed in a sequential way where one tag after the other communicates with the anchors to calculate its position (Time-Division Multiple Access (TDMA) principle, each tag has its own 'slot', see for example reference Time-division_multiple_access). Once all tags have finished calculating their position, the system starts over (system loop cycle time, typically ∼100ms).

The idea underlying to the method and system according to the invention is to use the internal timing of the UWB system to trigger the measurements of the ToF sensors.

A preferred embodiment of the system according to the invention comprises:
- the UWB system which comprises an electrical trigger output on each tag, and is further configured such that each time a tag manages to calculate a valid absolute or relative position, it will output an electrical trigger output pulse. Preferably a configuration may be realized by means of a firmware modification in a conventional prior art UWB system;
- an electrical connection between the UWB tag and ToF sensor or ToF sensor hub inside an entity carrying both tag and sensor, such as for example a robot; and
- the ToF sensor or ToF sensor hub, which comprises an electrical trigger input and adapted firmware to receive and handle the internal triggering.

Given the TDMA principle, all trigger pulses from all tags in the system will occur sequentially with a minimum time between those, thus leaving time for each attached ToF system to finish a ToF measurement without the risk of crosstalk with other systems. Preferably the minimum time is equal or greater than a duration of the active phase of the ToF system.

Referring to Figure 2, which schematically illustrates an example embodiment of a system according to the invention, the system comprises two main subsystems. The first main subsystem comprises the autonomous robots (2, 3) each with integrated active sensors 3. The second main subsystem comprises UWB transceivers or 'tags' 2 and UWB anchors 1. While the UWB anchors 1 are fixed in space, the autonomous robots (2, 3) may move in space and use their active sensors 3 for anti-collision and navigation purposes.

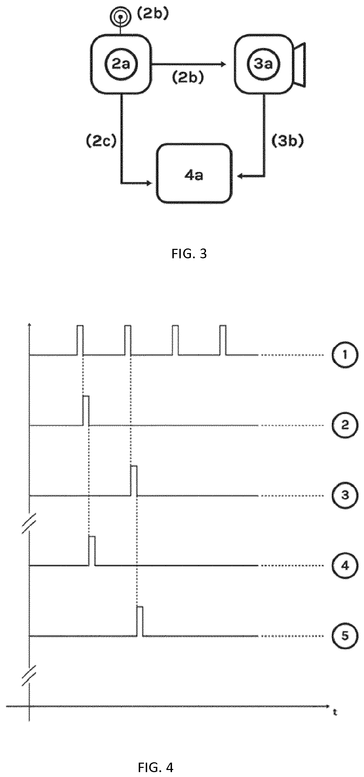

Figure 3 illustrates the internal configuration of an autonomous robot according to a preferred embodiment and configured to allow anti-interference operation according to the present invention. The internal configuration comprises an active sensor 3a with a connection 3b to a robot control system 4a. The connection 3b transports sensor data to the control system 4a to enable navigation and anti-collision functions. In addition, an UWB tag 2a together with its reception antenna 2b and data connection 2c for forwarding of position information to the robot control system 4a is part of the system. The inventive system further comprises an additional, direct connection 2b between the UWB tag 2a and the active sensor 3a. The connection 2b provides synchronization pulses from the UWB tag 2a to the active sensor 3a to allow interference-free operation of the active sensors in the case of multiple robots operating within the range of the active sensors 3a.

Figure 4 shows a timing diagram of the system. Line 1 is the TDMA communication between UWB anchors and tags (both not shown in Figure 4). Each pulse in line 1 illustrates a navigation message between the anchors and one tag (typically on an autonomous robot). The system (not shown in Figure 4) is managed in such a way that there is always only one tag communicating at the time, one after the other. Once all tags have finished communicating the system starts over. Lines 2 and 3 show output pulses of the UWB tags embedded in the autonomous robots. These output pulses are derived from the TDMA pulses and are transmitted via connection 2b shown in Figure 3, to the active sensors 3a also shown in Figure 3. These pulses then trigger the measurement of the active sensors, the active sensing phases are shown in lines 4 and 5. In the case that the time between two TDMA pulses is longer than the active sensing time of the active sensors plus the inherent system delays (pulse selection and transmission), no interference of the active sensors will occur even on comparatively long time scales.

More generally, the invention is not restricted to the use of ToF as sensors, including 3D cameras and other active sensors based on the ToF principle. Instead other sensors potentially suffering crosstalk at the time of measurement may also be used, such as distance measurement sensors and anti-collision sensors based on ultrasound ranging. It may even be possible to make use of a variety of sensor types together, whereby crosstalk may or may not occur between each variety of sensor types.

Further, the invention is not either restricted to make use of a UWB system. More generally, any Time-Division Multiple Access communication system being used in common by a plurality of entities carrying one of the variety of sensors is suitable to implement the invention, as long as the TDMA system attributes a corresponding tag to each one of the plurality of entities and the tag may be adapted to work in a manner similar to that described for the embodiments using UWB tags and ToF.

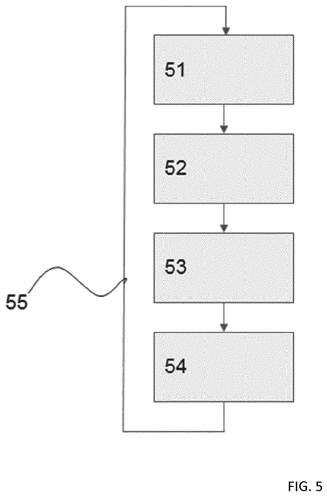

Referring now to Figure 5, this illustrates by means of a flowchart an example of a method for spatial sensor synchronization for one or more spatial sensors that are used together with a Time-Division Multiple Access (TDMA) communication system. Figure 5 shows the following steps:
Box 51: the one or more spatial sensors connects to the TDMA system;
Box 52: the one or more spatial sensors extracts a timing signal from a TDMA device's output signal after having addressed the TDMA device within the TDMA system;
Box 53: the one or more spatial sensors aligns to the timing signal;
Box 54: use the timing signal as a trigger signal to trigger one or a series of spatial sensors from the one or more spatial sensors for measuring; and
   Arrow line 55: repeat the method by starting again at the step of box 51.

In a preferred embodiment, the step of box 53, i.e., the step in which the one or more spatial sensors aligns to the timing signal, the action of « aligns » may be understood as a synchronization. In this step the sensor 'waits' for the timing signal to arrive. In a further preferred embodiment, the action of « aligns » means that an internal clock of the sensor gets synced with the timing signal and then the sensor waits a predefined time before measuring.

In a further preferred embodiment, the step of box 52 is preceded by a further step, wherein the timing signal is shaped and sent by the TDMA device such that it provides the right electrical characteristics for a trigger input of each respective one or more spatial sensors.

In a further preferred embodiment, the step of « use the timing signal » in box 54 involves providing the one or more spatial sensors in a daisy chain, whereby each spatial sensor receives, delays and re-emits the trigger signal, whereby each spatial sensor delays such that no crosstalk from measurements occurs. This is for example explained with respect to the timing diagram of figure 4.

In a further preferred embodiment, the step of « use the timing signal » in box 54 involves providing the one or more spatial sensors in a star topology of spatial sensors where each one of the spatial sensors receives the trigger signal at the same time and each one of the spatial sensors delays a start of the measuring by a different amount of time chosen such that no crosstalk from measurements occurs.

In a further preferred embodiment, the step of « use the timing signal » in box 54 involves providing the one or more spatial sensors in a sensor hub with the one or more spatial sensors connected to it. The sensor hub is configured to implement a step of determining a measurement sequence for the one or more spatial sensors in such a way that no crosstalk from measurements occurs. In an further preferred embodiment, the sensor hub is further configured to implement a step of optimizing a measurement speed depending on a geometrical configuration of the one on more spatial sensors.

### References

PMC4883398
   https://www.ncbi.nlm.nih.gov/pmc/articles/PMC4883398/
Multilaterations
   https://en.wikipedia.org/wiki/Multilateration
Time-division_multiple_access
   https://en.wikipedia.org/wiki/Time-division_multiple_access

## Claims

1. A spatial sensor synchronization system using a Time-Division Multiple Access (TDMA) communication system, intended for a plurality of entities evolving inside the TDMA communication system, whereby each one of the plurality of entities is intended to comprise a spatial sensor and a tag enabled to communicate in the TDMA communication system, further whereby each spatial sensor is enabled to make a spatial measurement during a determined active time period, further whereby the tags from the plurality of entities are addressed in sequence by the TDMA communication system with a determined sequence period separating two subsequent addresses in the TDMA communication system,
each of the tags comprising electrical trigger output means configured to output an electrical trigger to the sensor of the corresponding entity at the time of being addressed by the TDMA communication system,
each of the sensors comprising electrical trigger input means connected to the electrical trigger output means, and configured to initiate a spatial sensor measurement for each received electrical trigger,
whereby a duration of the sequence period is equal or greater than a duration of the determined active time period.

2. The system of claim 1, wherein the spatial sensor is a distance measurement or anti-collision sensor.

3. The system of either one of claims 1 and 2, wherein the TDMA communication system is an Ultra Wide Band (UWB) system.

4. The system of claim 1, wherein the spatial sensor is a Time of Flight (ToF) sensor, and the TDMA communication system is an Ultra Wide Band (UWB) system.

5. The system of claim 2, wherein at least one of the plurality of entities is intended to comprise at least an additional ToF sensor, and that the additional ToF sensor is also triggered by the received electrical trigger.

6. A method for spatial sensor synchronization for one or more spatial sensors that are used together with a Time-Division Multiple Access (TDMA) communication system, comprising steps of:
the one or more spatial sensors connects to the TDMA system;
the one or more spatial sensors extracts a timing signal from an output signal of a TDMA device after having addressed the TDMA device within the TDMA system;
the one or more spatial sensors aligns to the timing signal;
use the timing signal as a trigger signal to trigger one or a series of spatial sensors from the one or more spatial sensors for measuring; and
repeating the method by starting again at the step of the one of more spatial sensors connecting to the TDMA system.

7. The method of claim 6, whereby at the step in which the one or more spatial sensors aligns to the timing signal, the one or more spatial sensors waits for the timing signal to arrive.

8. The method of claim 6, whereby at the step in which the one or more spatial sensors aligns to the timing signal, an internal clock respectively of the one or more spatial sensors synchronizes with the timing signal, and each one of the one or more spatial sensors waits a predefined time before measuring.

9. The method of claim 6, wherein prior to implementing the step of the one or more spatial sensors extracting a timing signal, the method further comprises a step of shaping and sending the timing signal by the TDMA device such that it provides right electrical characteristics for a trigger input of each respective one or more spatial sensors.

10. The method of claim 6, wherein the step of using the timing signal further comprises a step of providing the one or more spatial sensors in a daisy chain, whereby each spatial sensor receives, delays and re-emits the trigger signal, whereby each spatial sensor delays such that no crosstalk from measurements occurs.

11. The method of claim 6, wherein the step of using the timing signal further comprises a step of providing the one or more spatial sensors in a star topology of spatial sensors where each one of the spatial sensors receives the trigger signal at the same time and each one of the spatial sensors delays a start of the measuring by a different amount of time chosen such that no crosstalk from measurements occurs.

12. The method of claim 6, wherein the step of using the timing signal further comprises a step of providing the one or more spatial sensors in a sensor hub with the one or more spatial sensors connected to it, the sensor hub being configured to implement a step of determining a measurement sequence for the one or more spatial sensors in such a way that no crosstalk from measurements occurs.

13. The method of claim 12, wherein the sensor hub is further configured to implement a step of optimizing a measurement speed depending on a geometrical configuration of the one on more spatial sensors.
